**Europäisches Patentamt**

**European Patent Office**

**Office européen des brevets**

(19)

(11) Publication number : **0 506 489 A2**

## (12) EUROPEAN PATENT APPLICATION

(21) Application number : **92302795.7**

(22) Date of filing : **30.03.92**

(51) Int. Cl.⁵ : **G11B 15/68, G11B 17/22**

(30) Priority : **29.03.91 JP 89312/91**

(43) Date of publication of application :
**30.09.92 Bulletin 92/40**

(84) Designated Contracting States :
**DE FR GB**

(71) Applicant : **SANKI ENGINEERING CO. LTD.**
**4-1 Yuraku-cho 1- chome**
**Chiyoda-ku, Tokyo 100 (JP)**

(72) Inventor : **Yamamoto, Kozo**
**105, 29-3, Yatsu 3-chome**
**Narashino-shi, Chiba-ken 275 (JP)**
Inventor : **Oguma, Atsushi**
**406, 12-15, Adachi 3-chome**
**Adachi-ku, Tokyo 120 (JP)**

(74) Representative : **Jones, Andrée Zena et al**
**CRUIKSHANK & FAIRWEATHER 19 Royal**
**Exchange Square**
**Glasgow, G1 3AE Scotland (GB)**

(54) **Automatic mount installation for magnetic tapes.**

(57)    The invention relates to an automatic mount installation for magnetic tapes comprises, trays (11) containing a plurality of arranged magnetic tapes, magnetic tape drives (12), tray stations (14) temporarily loading a plurality of trays (11), mounting robots (16) disposed between the tray stations and the magnetic tape drives, tray storage racks (30) separately disposed from the tray station, tray robots (20) transferring trays to and from both the tray stations and the tray storage racks, load/unload stations and an information control unit (71). It is possible for the installation to exchange a large volume of required tapes in tray units without interrupting the mount work, to shorten the delivery time of tapes to and from magnetic tape drive systems and to progress operation availability of magnetic tape drives.

EP 0 506 489 A2

EP 0 506 489 A2

This invention relates to an installation for automatic storage of information mediums, particularly but not exclusively, cartridge magnetic tapes, and mounting the same in magnetic tape drives.

Conventionally, a magnetic tape library for a small volume of frequently used magnetic tapes is known from U.S.P. No. 3,381,197 and Japanese Patent Laid Opened Specification No. Sho 63-168,871. The library has a function of storing and mounting magnetic tapes, but for a tape operation, the workload of the operator becomes considerably high compared with that of the librarian. Further, in a library with a large volume of magnetic tapes, having a mixture of frequently and infrequently used tapes, the operation depends on manual work and the workloads both of the librarian and the operator become high, therefore automatic tape operation is desirable.

Due to the recent increase in the volume of tapes to be stored and operated, the manual operation for magnetic tapes reaches its limits and automation tape operation is necessitated. In the conventional tape library system, a plurality of the same kinds of apparatuses are provided for preliminarily containing tapes (fixed storage) respectively, thereby the automatic tape operation is performed. In such a library system, since the workload of each apparatus is so different in respect of variation of tape operation volume that one apparatus may reach its process faculty limit (overflow) and the other apparatuses are in idling condition, the tape operation efficiency is lowered and it is necessary to provide excessive apparatus in order to solve the above problem.

It is an object of this invention to improve the efficiency of the tape operation and further to perform the economical automatic operation of a large volume of magnetic tapes. It is a further object of this invention to provide an installation in which the tape operation is so automated that the storage facility and the mount facility for tapes are separated, thereby tapes to be used are always picked from the tape storage unit and a large volume thereof are supplied to the mount unit in tray units. It is another object of this invention to provide the installation of selectively mounting a large volume for example, 50,000 or more, of magnetic tapes prepared in tray units to magnetic tape drive.

To achieve the above objects, there is provided an automatic mount installation for magnetic tapes or the like comprising a tray for containing a plurality of cartridge magnetic tapes in arranged condition, magnetic tape drives for recording and replaying magnetic tape data, a tray station for temporarily loading a plurality of trays, a mount robot disposed between the tray station and magnetic tape drives for picking the selected magnetic tape from the tray to mount it on the magnetic tape drives and to demount it from the drive to re-store it in the tray, an information control unit for moving the mounting robot toward the picking position and for controlling picking actuation of the robot, the tray station having a rack capable of horizontally storing a plurality of trays, and the mounting robot having a self-travelling mechanism for travelling along the front surface of the tray station and for stopping at the picking position.

It will be understood that the mediums to be mounted by the installation of this invention includes mechanically readable data exchanging medium such as a magnetic tape, a magnetic disk, an optical disk and a microfiche.

The tray contains a maximum of 30 reels of magnetic tapes which are arranged in order of operation to be used in a group of magnetic tape drives. The tray is preliminary prepared in the tray storage rack by the tray robot and according to the command for mounting tapes to the drive, the required tray is set in the tray station and is picked up by the mount robot to automatically put in magnetic tape drives.

Preferred features of examples according to this invention are:

(1) The automatic mount installation for magnetic tapes substantially composed of the tape mount faculty which is separated from the tape storage faculty, whereby the only tape intended for use can be mounted in magnetic tape drives. The one or more required tapes are selected from a large volume of tapes which are stored externally of the installation and are contained in the tray. At the time of using the required tape, the tray contained tape is set in the desired position of the tray station by the tray robot. The mount robot picks the required tape from the tray which is set in the station and mounts it in magnetic tape drives.

(2) For mounting the required tape in magnetic tape drives, it is capable of exchanging a group of tapes in each tray. The tray, capable of containing the maximum 30 reels of cartridge magnetic tapes is prepared. The tape storage facility and the tape mount facility in magnetic tape drives are so separated from each other that the tray robot which loads/unloads trays on or from the tray storage rack and the mount robot which mounts the required tape in magnetic tape drives are independently prepared, thereby the efficient tape mount is performed.

(3) At the time of exchanging the tape in each tray, the tape information chart in the tray is confirmed or is re-programmed by automatic reading of the tray number and the tape number (Vol #) that during the transfer of the tray, the unit automatically reads the recognition codes which are adhered to both the tray and the tape by means of an appropriately timed reading by a reflecting mirror which is provided on the side surface of the tray, and the unit confirms the read tape information map or re-programmes it.

(4) The required tray is supplied to the predetermined tray station in accordance with the tape mount command. It is capable of supplying any of trays directly to each tray station by the tray robot. The required

2

tape is supplied to each group of magnetic tape drives (train), the magnetic tape drive is effectively utilized and the load of the tape mount can be distributed and equalized for each magnetic tape drive, thereby the stable operational availability of CPU is achieved.

(5) For mounting a plurality of tapes, substantially, the mounting is so operated in order of the commands that in the case of the tray containing the required tape not being set in the tray station, said command is delayed until said tape is set, and the next following required tape which was already set in the tray is operated ahead of it.

(6) For delivering the tape to and from a plurality of mount robots, the tape is not delivered through the intermediary of the mount robot but delivered directly to the designated mount robot by a transferring route (the delivering unit) which is separately provided in the system, whereby the operation of the mount robot itself is not interrupted so frequently.

(7) During the operation, the tray is always filled with tapes to be used again and to be delivered and there is always one empty station ready for the following operational tapes, thereby the loss of tray exchanging time can be avoided. Further, during the operation, the necessary numbers of trays containing tapes to be used again and to be delivered can be set.

(8) In the installation, it is easy manually to back up the operation of both mount robots by demount/mount indication. Further, in the case of the tray robot being out of order, it is capable of easy manual backing up by tray exchanging indication and tray loading/unloading indication. The supplying/collecting segment and storage rack address (seven segment indication) are provided at one part of the tray station, whereas the tray exchanging indication and also the loading/unloading segment and storage rack address (seven segment indication) are provided at one part of the load/unload station.

(9) The mount robot is an articulated robot comprising a turret hand robot in which the maximum four hand chucks can be attached to the hand portion thereof as a tool. For mounting or demounting a plurality of tapes, two of tapes to be mounted or demounted can be handled simultaneously and the mount and demount operation can be continuously operated in complex cycle, thereby the shortening of mounting/demounting time is realized.

These and other objects and many of the advantages of this invention will be readily appreciated from the following detailed description of an example of an installation according to the invention given in the following detailed description when read in conjunction with the accompanying drawings, in which:-

Figure 1 is a perspective view partially broken away of an automatic mount installation for magnetic tapes illustrative of an embodying the invention;

Figure 2 is a plan view of the automatic mount installation for magnetic tapes as shown in Figure 1;

Figure 3 is an enlarged sectional view of the installation taken along the line A - A of Figure 2;

Figure 4 is a plan view of the installation in which modules of one system of the installation as shown in Figure 2 are disposed at left and right sides thereof and are connected with each other;

Figure 5 is an enlarged sectional view of the installation taken along the line B - B of Figure 4;

Figure 6 is a plan view of the installation in which front and rear modules of one system of the installation as shown in Figure 2 are connected with each other;

Figure 7 is a block diagram of the systematic composition of the installation illustrative of the invention;

Figure 8 is a front view of the mount/demount indication for manual operation in the case of the robot being out of order;

Figure 9 is a front view of the indication of loading/unloading tray;

Figure 10 is a front view of the indication of exchanging tray;

Figure 11 is a perspective view of tray;

Figure 12 is a vertically sectional view of tray;

Figure 13 is a side view of the mount robot provided with a carriage;

Figure 14 is a side view of the robot hand;

Figure 15 is a front view of the robot hand as shown in Figure 14;

Figures 16 to 18 are a plan view, a side view and a front view, respectively, of the magnetic tape delivering unit for the magnetic tape;

Figures 19 to 21 are a plan view, a front view and a side view, respectively, of a modified embodiment of the magnetic tape delivering unit;

Figures 22 and 23 are a plan view and a front view, respectively, of another modified embodiment of the magnetic tape delivering unit;

Figure 24 is a plan view of an input/output (I/O) station of the example;

Figure 25 is a side view of the I/O station as shown in Figure 24;

Figure 26 is a front view of the I/O station as shown in Figure 24;

Figures 27 to 29 are a plan view, a side view and a front view, respectively, of the modified embodiment of the I/O station illustrative of the invention;
Figure 30 is a flow sheet of loading the tray for containing the magnetic tape;
Figure 31 is a flow sheet of unloading the tray for containing the magnetic tape;
Figure 32 is a flow sheet of the automatic operation of transferring the tray;
Figure 33 is a flow sheet of transferring the tray at the tray station;
Figure 34 is a flow sheet of an initial step of the automatic operation of transferring the tray in case of interruption;
Figure 35 is a flow sheet of a further step of the automatic operation of transferring the tray in case of interruption;
Figure 36 is a typical plan view of a whole installation in which the tray station is selected and assigned to magnetic tape drives;
Figure 37 is a typical explanatory view of outstanding trays and tray stations of the invention; and
Figure 38 is a typical explanation view of outstanding trays and tray stations of a conventional installation.

## General

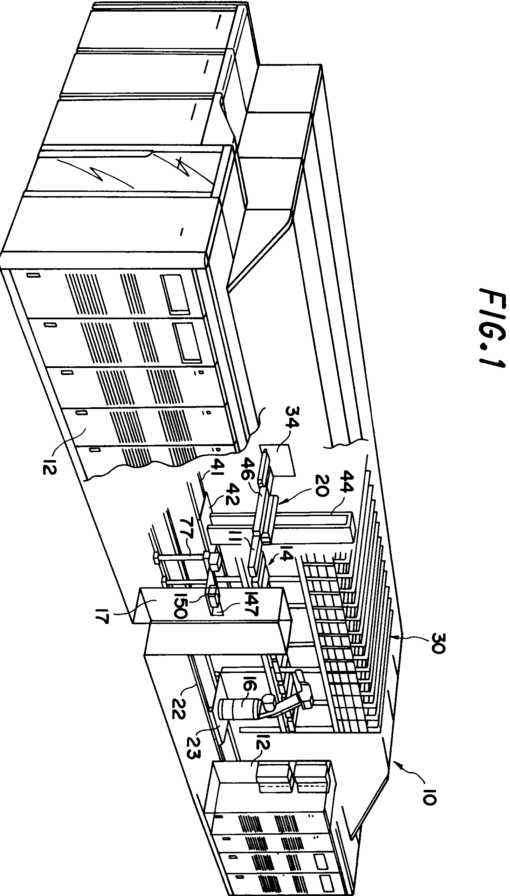

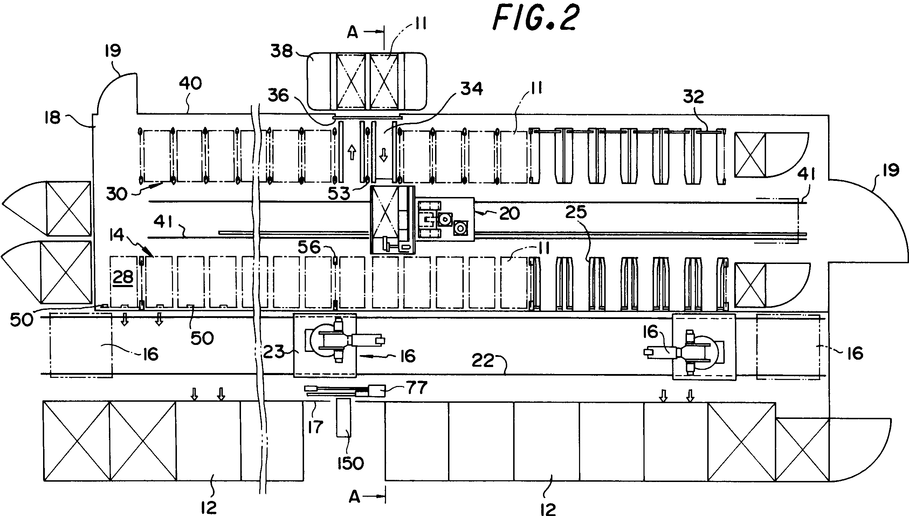

In Figures 1 and 2, there is illustrated an automatic magnetic tape mount installation, generally designated 10. The installation handles trays 11 which contain plurality of cartridge magnetic tapes in an arranged condition. The principal portion of the installation comprises a plurality of magnetic tape drives 12 for recording and replaying the magnetic tape, a tray station 14 for temporarily loading a plurality of trays 11, a mount robot 16 disposed between the tray station 14 and magnetic tape drives 12 for picking up the determined tape of the required tray and mounting/demounting the tape to re-store it in the tray, and an information control unit 71 for transferring the mount robot 16 to the picking position of the tape and controlling the picking actuation of the mount robot.

## Tray

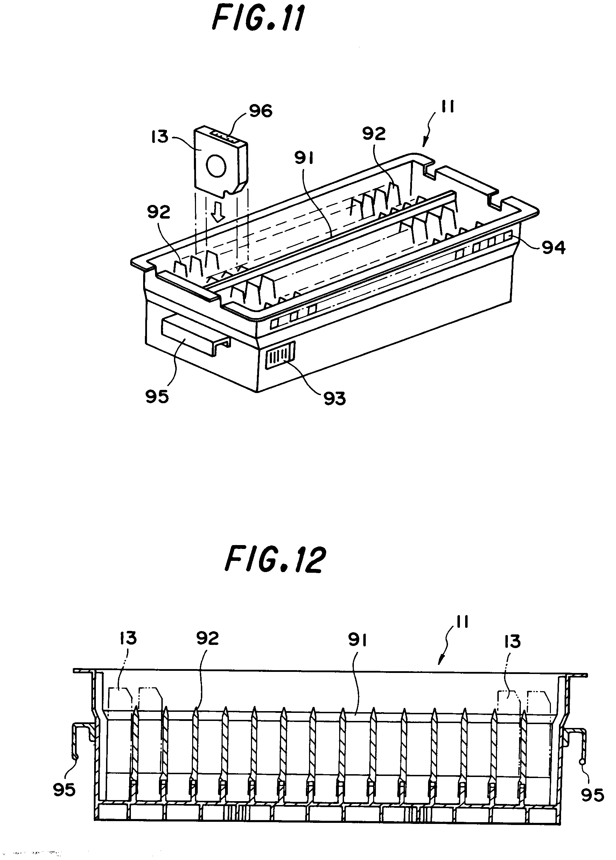

The tray 11 of the present invention is similar to that disclosed by the description of our U.S. Patent Application No. 07/605,379. As described in Figures 11 and 12, vertical or lateral partitions 91, 92 are provided inside of tray for arranging and containing a plurality of cartridge magnetic tapes 13 therein (two lines and fifteen rows thereof are shown). A recognition code 93 such as a bar code or projection is allotted at the long side of the tray and in respect of relative rows of partitions, for having a timing of reading the recognition code, a reflecting mirror 94 is adhered on the outer wall of the tray. For easily manual handling, the tray has handles 95 at respective ends thereof. The tray number is read by a code reader during the tray transferring through each tray station, whereby the tray is controlled to load/unload and pick up. The magnetic tape 13 is also provided with a bar code 96 at the end surface thereof to control individual information thereof (Figure 11).

## Magnetic Tape Drives

Magnetic tape drives 12 are popularly used as a supplemental recording unit of the host computer and comprises a tape drive mechanism for travelling the magnetic tape at a certain speed, a magnetic head to record/replay the tape data and an electronic circuit for controlling them. The disk drive for using a magnetic disk or an optical disk as a data exchanging medium in place of the magnetic tape, comprises a disk type recording medium for rotating the disk, a magnetic head for recording/replaying the data or an optical read and write unit, a location unit and an electronic circuit. In Figures 1 and 2, a module comprises 30 to 60 in number of the above described magnetic tape drives 12 horizontally close to each other.

## Tray Container

Two mount robots 16 are disposed for travel at the front of a group of magnetic tape drives and a tray container 18 abuts thereto. The tray container 18 includes a tray station (unit) 14, a tray robot 20 and a tray storage rack 30. It is impossible to enter into tray container 18 thereto except by a check counter 19 to store trays and magnetic tapes safely. As shown in Figure 1, the partition 17 is disposed through an area where the mount robot 16 travels, thereby the security of the whole installation is ensured.

## Mount Robot

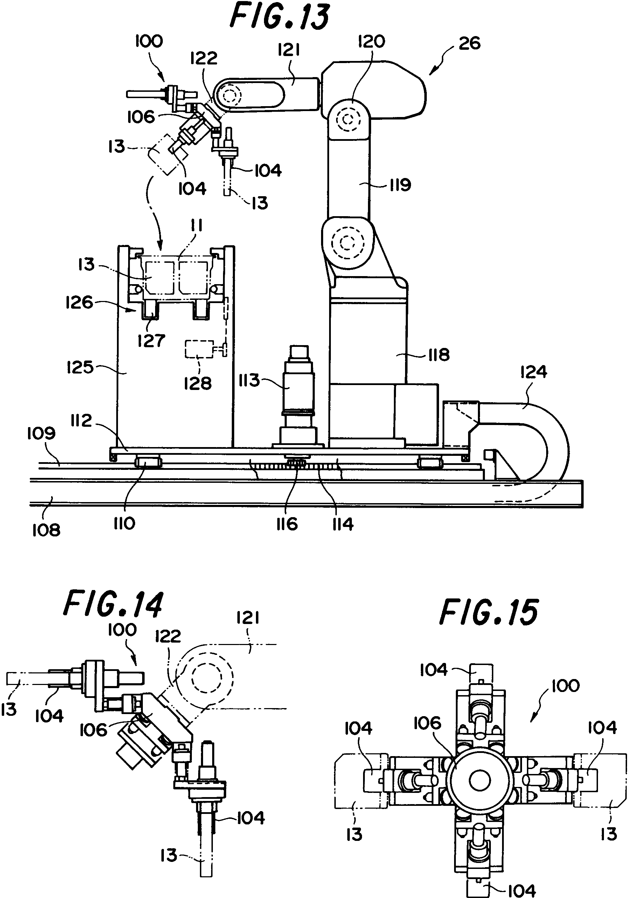

Respective mount robots 16, as shown in Figure 2, are attached on two carriages 23 travelling along the rail 22 provided in front of delivering counter of the tray station 14. The mount robot 16 is robot articulated about six axes and having a rotatable, foldable and expanding arm 98 and hand 100. As shown in Figures 14 and 15, the hand 100 of the mount robot comprises a turret head 106 in which the maximum four sets of fingers 104 are attached at the rotatable wrist 122 thereof, whereby, for a plurality of tape mounting and demounting requirements, simultaneously handling of two of the mounted tapes or demountd tapes and sequentially operating demount and mount actuation in the complex cycle are achieved.

In Figures 1 and 2, the mount robot 16 comprises a main body disposed on the carriage 23, which has a trunk, a shoulder, an elbow and an arm. It is possible to use a robot 26 provided with carriage capable of holding and shuttle transferring trays toward the direction orthoganol to the robot travelling direction. As shown in Figure 13, the robot 26 is loaded on a beam 108 provided on the floor surface between the tape drives 12 and the tray station 14, in which a slidable pallet 112 is loaded on the rail 109 secured on the beam through the intermediary of sliding shoes 110, 110, a motor 113 for self-travelling is attached at the center of the pallet 112 and the outputting axis thereof protrudes with respect to the under surface of the pallet 112 to receive a pinion 116 engaging the inside rack 114. Numeral 124 designates a cable conveyor. The 6 axes-articulated robot 26 is disposed on the one side of the motor and has a trunk 118, a shoulder 119, an elbow 120, an arm 121, a wrist 122 and the turret head 106. A load base 125 for loading trays is disposed at the other side of the pallet 112 through the intermediary of the motor 113. Two belts 127 and a carriage 126 which has a belt driving unit 128 on the base 125, are provided whereby it is capable of transferring a tray on the load base toward the tray station 14 by belt driving, and vice versa.

The mount robot 16 picks the required magnetic tape in the tray station 14 in accordance with the picking command from the control unit 71 and mounts it in magnetic tape drives 12 or demounts it therefrom to place it in the tray. Further functions of the mount robot 16 are:

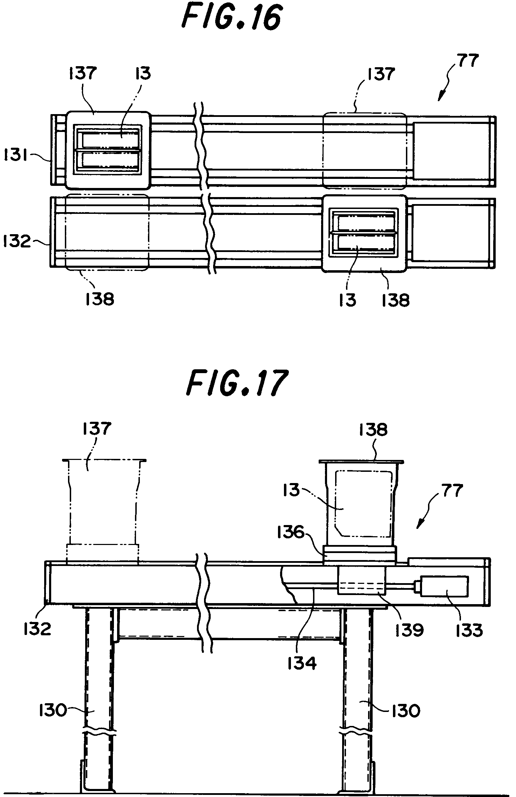

(a) transferring the magnetic tape to the place between a delivering unit 77 which will be described hereinafter (as shown in Figure 16) and magnetic tape drives 12.

(b) transferring the magnetic tape to a position between the delivering unit 77 and the tray station 14.

(c) transferring the magnetic tape to a position between two robots by the delivering unit 77 (as shown in Figure 16) which will be described hereinafter.

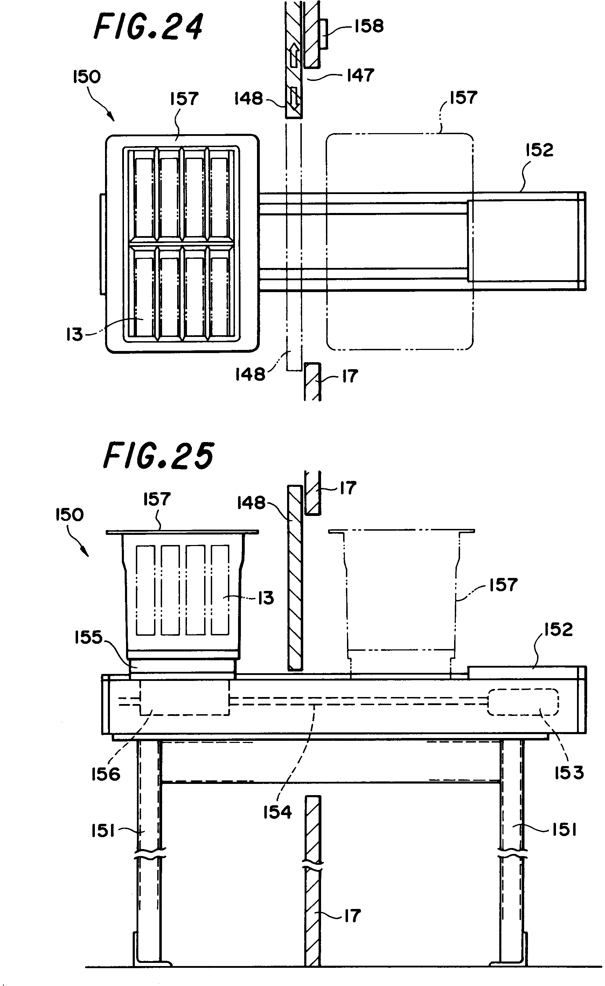

(d) transferring the magnetic tape to a position between I/O station 160 which will be described hereinafter (as shown by Figure 24) and magnetic tape drives or the tray station.

(e) mounting/demounting tapes upto 1,000 mm in magnetic tape drives, even if the mounting positions thereof are different from each other.

(f) degenerating operation (when one robot is out of order, the other robot is capable of operating to cover it). Additionally the carriage provided robot 26 has a function of transferring the magnetic tape to a position between the tray 11 on the loading base and each of magnetic tape drives, the tray station, the delivering unit or the I/O station.

## Tray Station

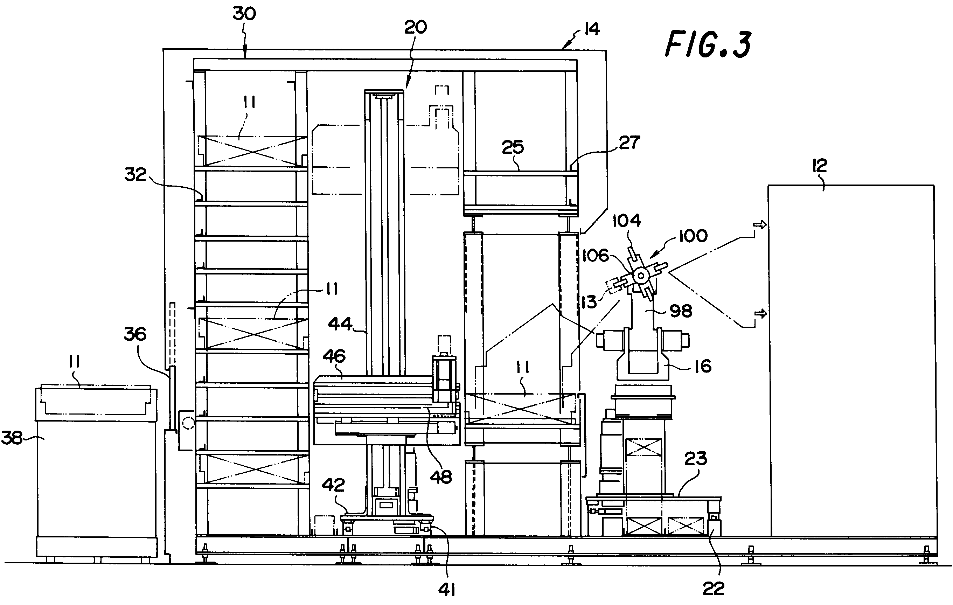

As shown in Figures. 2 and 3, the tray station 14 has racks 25 for loading trays 11 in many steps and many lines. In Figure 3, from the fourth to the eighth steps of trays from the bottom, no racks are disposed, in order to avoid the collision with the arm of the robot. At the delivery side of mount robots 16, stoppers 27 are respectively provided to prevent trays from falling down to the mount robot travelling side and an interrupt station 28 for a manual operation is provided at the leftmost end of the station. Functions of the tray station are:

(a) preparing and setting required numbers of trays containing tapes which are now operated, or are outstanding, or are used again or are delivered.

(b) a tray locating function of directly picking tapes from the tray by the mount robot.

(c) indicating the tray exchanging information (supplying/ collecting, FROM-TO information).

(d) indicating the mount/demount information (mounting/ demounting, locating information).

(e) in case of interruption (occasion of tape error or lack of tapes), preparing and setting trays containing the required tape (setting trays in the station 26 manually).

## Tray Storaqe Rack

Tray storage racks 30 for storing tapes in tray units are disposed opposite to the tray station 14. A load/unload counter (load/unload station) 34 having a conveyor is disposed substantially centrally of the lines of racks and is connected to a magnetic tape storage unit 40 through the intermediary of a shutter 36. The magnetic tape storage unit 40 (not shown in Figures in detail), is provided with racks capable of storing a plurality of magnetic tapes; the pre-determined tape is contained in the tray by a picking robot which is separably attached thereto and the tray is transferred by an unmanned transfer means 38. At the opposite side of the front of the tray storage rack 30, stoppers 32 for preventing trays from falling down are disposed. Functions of the load/unload station 34 are;

(a) loading/unloading tapes in tray units to and from the outside of the installation, the tape storage unit 40.

(b) automatic reading of the tray number or the tape number (Vol #) to confirm or re-programme the tape information map in the tray.

(c) displaying the load/unload information of the tray (load/unload, FROM-TO information).

As shown in Figures 2 and 3, a tray robot 20 is disposed in an area between the tray station 14 and the tray storage rack 30 and is guided by a rail 41. In accordance with the tray control information, the tray robot 20 is actuated to transfer trays from the tray station to the tray storage rack and vice versa. The tray robot 20 comprises a carriage 42 running along the rail 41, a post 44 mounted on the carriage 42, a load base 46 attached heightwise in respect of the post 44 and tray shuttle means 48 contained in the load base 46.

Tray Indicator

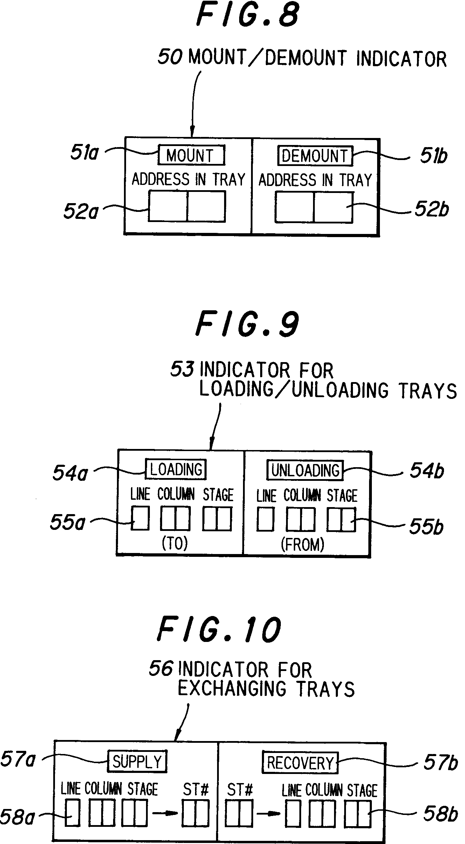

For manual operation in the case of the robot being out of order, indicators are so prepared, as shown in Figures 2 and 3, near to both of the front of the tray station 14 (at the side of stopper 27 of each rack) and a home position of the mount robot 16, to permit mount/demount indicators 50 to be attached in respect of each tray station, and tray loading/unloading indicators 53 are attached to respective upper portion of the tray container inside of load/unload station 34 and tray exchanging indicators 56 are attached at frames of upper racks of respective tray stations. Figure 8 is a front view of the mount/demount indicator 50, Figure 9 is a front view of the loading/unloading indicator 53 and Figure 10 is a front view of the tray exchanging indicator 56. The indicator 50 has a mount indication lamp 51a and a tray address indication lamp 52a at the left side thereof and has a demount indication lamp 51b and a tray address indication lamp 52b at the right side thereof. The indicator 53 has a load indication lamp 54a and a lamp 55a for indicating a line, a row and a step of the rack at the left side thereof and a demount indication lamp 54b and a lamp 55b for indicating a line, a row and a step of the rack at the right side thereof. Further the indicator 56 has a tray supply indication lamp 57a and a lamp 58a for indicating a line, a row and step of the rack at the left side thereof and a tray collecting indication lamp 57b and a lamp 58b for indicating a line, a row and a step of the rack and the tray station number at the right side thereof. Those indication lamps are respectively composed of LED's having seven segments.

System Component

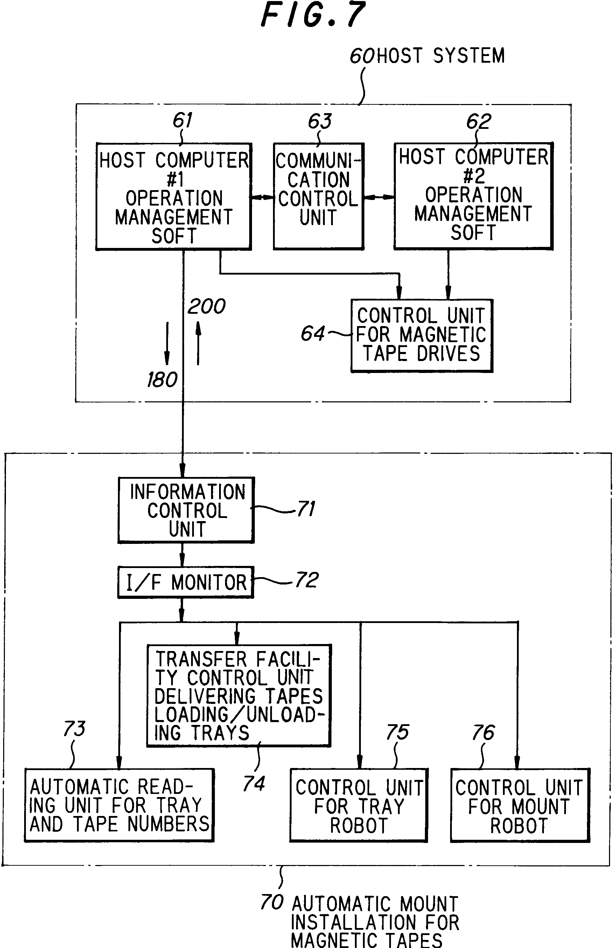

Figure 7 is a block diagram of the system component of the installation of the invention comprises a host system 60, host computer 61 and 62, a communication control unit 63 connecting with host computers 61,62 and a control unit 64 of magnetic tape drives. Further the system comprises an automatic magnetic tape mount installation 70, an information control unit 71, I/F monitor 72, an automatic reading unit 73 for tray numbers and tape numbers, a transferring equipment control unit 74 for controlling of loading/unloading of trays and delivering tapes, a tray robot control unit 75 and a mount robot control unit 76.

The information control unit 71 controls;

(a) loading/unloading trays.

(b) operation of the tray robot.

(c) management of free location information of the storage rack and the tray station.

(d) exchanging of trays.

(e) operation of the mount robot.

(f) exclusion of two mount robots.

(g) operation of the tape delivering unit.

(h) indication of tray load/unload information, tray exchanging information and tray mount/demount information (of the tray station and the tray delivering counter).

In Figure 7, the signal from the host system 60 to the automatic mount installation 70 for magnetic tapes flows as shown by numeral 180 and returns as shown by numeral 200 and one example thereof are listed hereinbelow.

| Information Flow | Items | Contents |
|---|---|---|
| Signal 180<br><br>Host System | Tape Loading Information (Tray Construction Data) | Tape No.<br>Work Unit No.<br>Objections (Automatic Installation No. For Magnetic Tapes) or the like |
|  | Returnable Tape Information (Outstanding Tape Information) | Tape No.<br>or the like |
| ↓ | Mount/Demount Command | Tape No.<br>Magnetic Tape Drive No.<br>or the like |
| Automatic Installation For Magnetic Tape | Tape Information For Interruption (Tray Construction Data) | Tape No.<br>Work Unit No.<br>Objections (Automatic Installation No. For Magnetic Tapes) or the like |
| Signal 200<br><br>Automatic Installation For Magnetic Tapes | Load/Unload Results | Date of Loading /Unloading Tape No.<br>Work Unit No.<br>Objections (Automatic Installation No. For Magnetic Tapes) or the like |
| ↓ | Mount/Demount Results | Date of Use Tape No.<br>Work Unit No,<br>Objections (Automatic Installation No. For Magnetic Tapes) or the like |
| Host System |  |  |

Delivering Unit

There are three kinds of units delivering magnetic tapes;

(a) In one system comprising a module composed as shown by Figure 2, the unit 77 delivering magnetic tapes towards a position between two mount robots in said module.

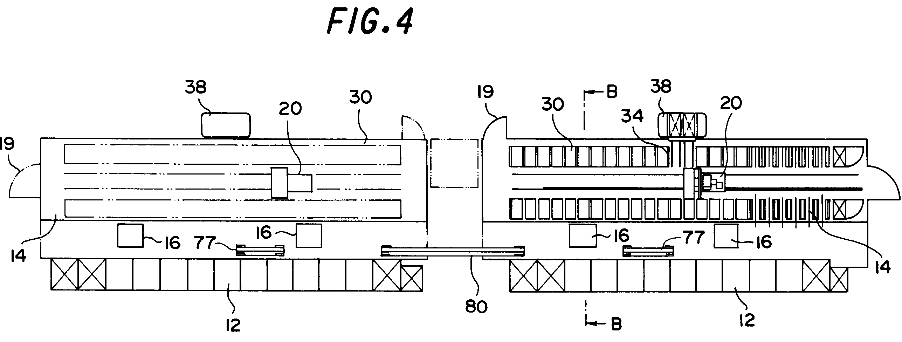

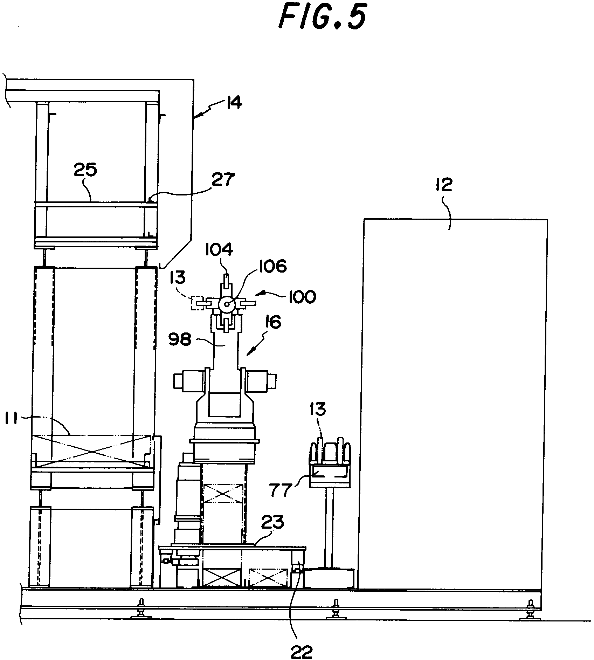

(b) As shown by Figures 4 and 5, in a system comprising sets of right and left side modules, one of which is shown by Figure 2, the unit 80 delivering magnetic tapes towards the position between mount robots in the respective modules.

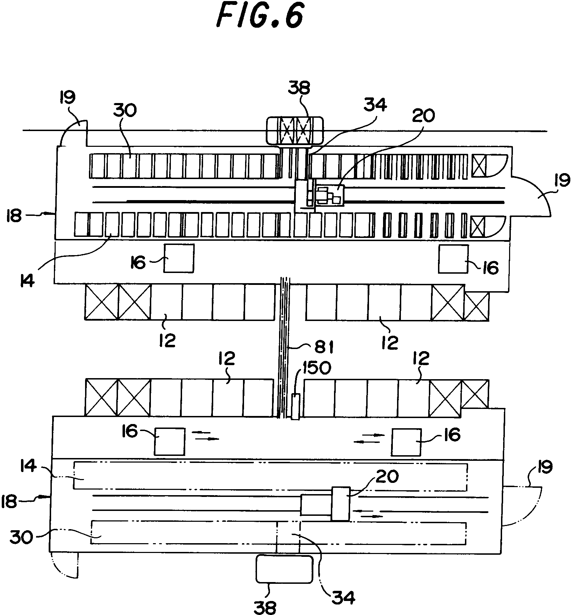

(c) As shown by Figure 6, in a system comprising fore and rear modules, one of which is shown by Figure 2, the unit 81 delivering magnetic tapes toward the position between mount robots in respective modules.

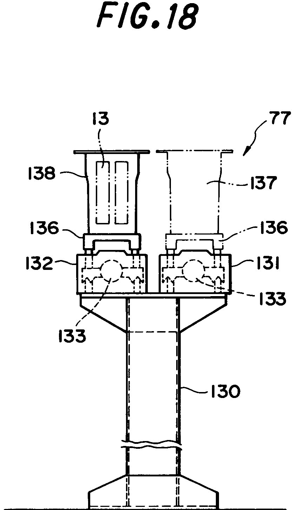

The delivering unit 77 is described in Figures 16 to 18 in detail and it is preferred, as shown in Figures 2 and 5, to disposed the unit at the front of magnetic tape group. In the unit 77 two parallel bases 131, 132 are respectively disposed on stands 130, 130, reversible DC motors 133, 133 are disposed at one side of bases 131, 132 respectively and screws 134 rotated by each DC motor are respectively attached with respect to the longitudinal direction of the base. On the upper surface of bases 131, 132, sliders 136, 136 are loaded to support containers 137, 138 which respectively contain magnetic tapes 13 and a plurality of balls 140 which engage the screw 134 are contained in a saddle 139 under the slider 136, whereby a recirculating ball gear is formed. By actuating the DC motor 133, the slider 136 which supports the container 137, 138 reciprocatingly travels on the base.

The containers 137,137 on the two parallel bases 131,132 are so operated to locate at opposite sides to each other, so that one container locates at a left end thereof when the other locates at the right end thereof. In Figure 16, solid lines shows that the magnetic tape 13 is received or delivered from the container 137 stopping at the left end of the base 131 by the access of the left side mount robot in the module and other magnetic tape 13 is received and delivered from the container 138 stopping at the right end of the base 132 by the access of the right side mount robot in the module (the mount robot is not shown in Figures 16 to 18).

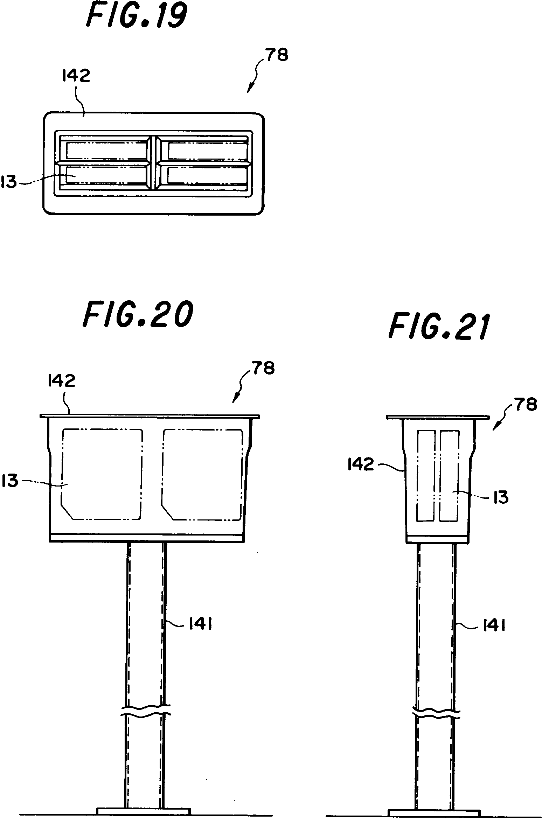

Figures 19 to 21 show a modified delivering unit 78 in which a container 142 capable of containing upto four magnetic tapes in total (2 x 2), is secured on a stand 141, the two magnetic tapes on the lefthand side of the container are received by access of the left side mount robot in the module and are delivered and two righthand side tapes are received by the access of the right side mount robot and are delivered.

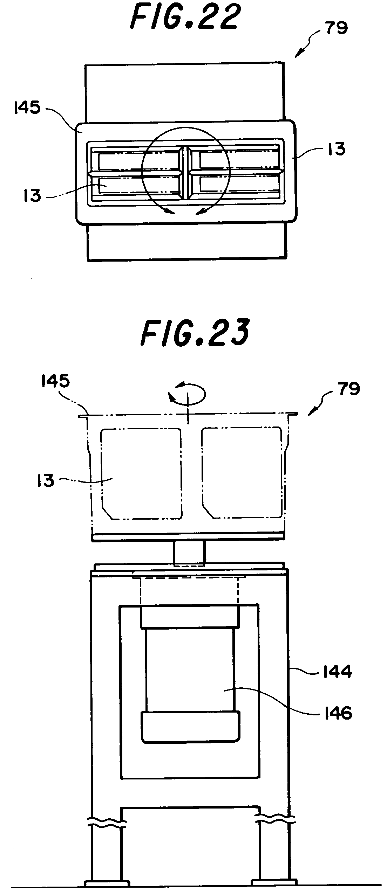

Figures 22 and 23 show another embodiment of the delivering unit 79 in which a container 145 capable of containing up to four magnetic tapes (2 x 2), is rotatably attached on a stand 144, to rotate 180° in accordance with the access of the mount robot by the actuation of DC motor 146 provided in the stand 144, whereby the position where magnetic tape is delivered and is received is reversible.

Figures 16 to 23 show the unit for delivering magnetic tapes to the place between robots in the module which is type (a). The delivering units 80, 81 indicated by (b) and (c) are disposed between magnetic tape drives in left and right sides modules (as shown in Figure 4) and are disposed between magnetic tape drives in fore and rear modules (as shown in Figure 6), respectively and have substantial same components as shown in Figures 16 to 23, and are therefore not shown.

I/O station

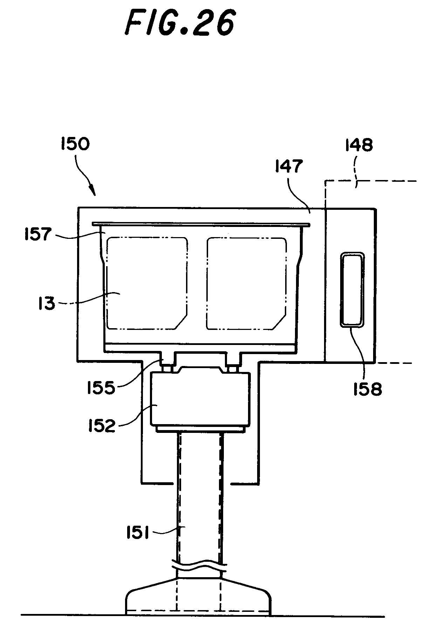

The I/O station 150 always mounts the required magnetic tape from the exterior of the installation. As shown in Figures 24, 25 and 26, an opening 147 is provided on the wall 17 surrounding the system to receive a base 152 supported by a stand 151. Similarly to the base shown in Figures 16 to 18, the base 152 has a reversible DC motor 153, a screw 154, a slider 155 and a saddle 156 and a container 157 capable of containing up to eight magnetic tapes (2 x 4) is loaded on the upper of the slider 155. A shutter 148 is disposed near to the opening 147 and at the side of the opening 147, lamps are disposed for indicating readiness for unloading, starting to pick up and starting to transfer when the delivering of magnetic tapes is commenced, and an indicator 158 is also provided to indicate the object No. in seven segments to where the automatic mount unit travels. For delivery, the shutter is opened and the container 157 is transferred on the base 152 by actuating DC motor 153. The magnetic tapes are inserted into the system module and are picked up by mount robots 16, 26 to mount on the required magnetic tape drive 12.

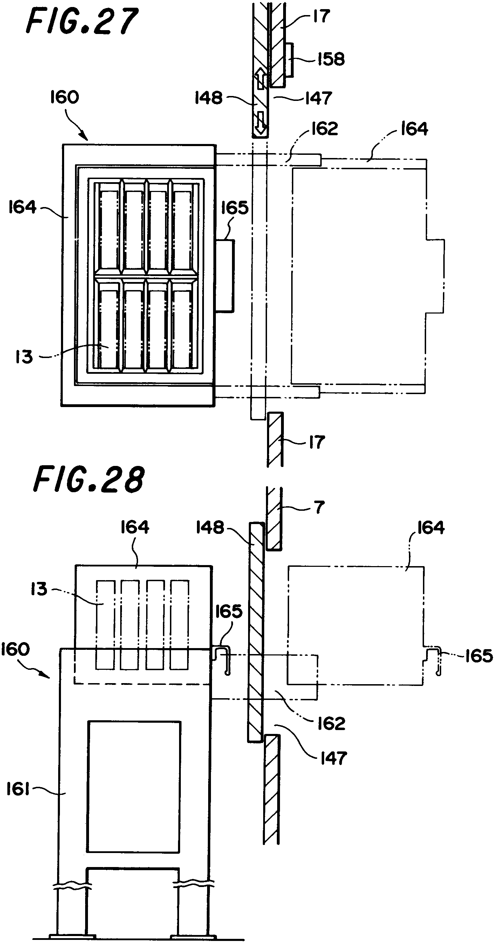

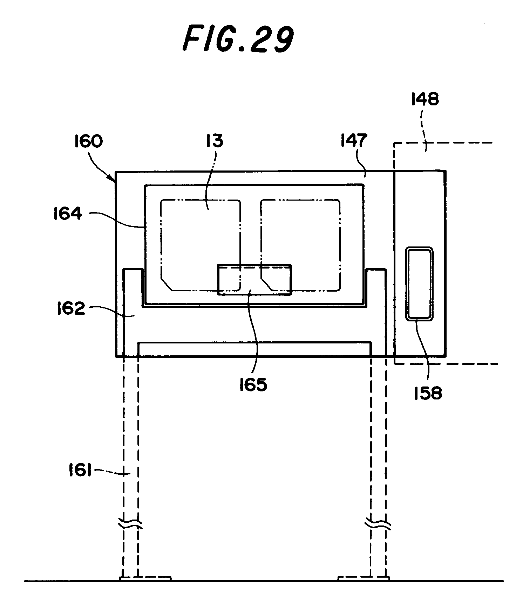

The I/O station 160 for manually inserting the required magnetic tape from the exterior of the installation is shown in Figures 27 to 29, in which a stand 161 is disposed in the inside module area of the wall 17, a sliding rail 162 is disposed on the upper surface of the stand 161 to set a container 164 capable of containing up to eight magnetic tapes 13 (2 x 4) and numeral 165 indicates a handle. For delivering magnetic tapes, as shown by a chain-dotted line in Figures 27 and 28, the container 164 is drawn out of the wall by pulling the handle 165 and is pushed into the position shown by a solid line therein.

## Operation

The operation of loading trays containing magnetic tapes by the installation illustrative of the invention will be described hereinbelow.

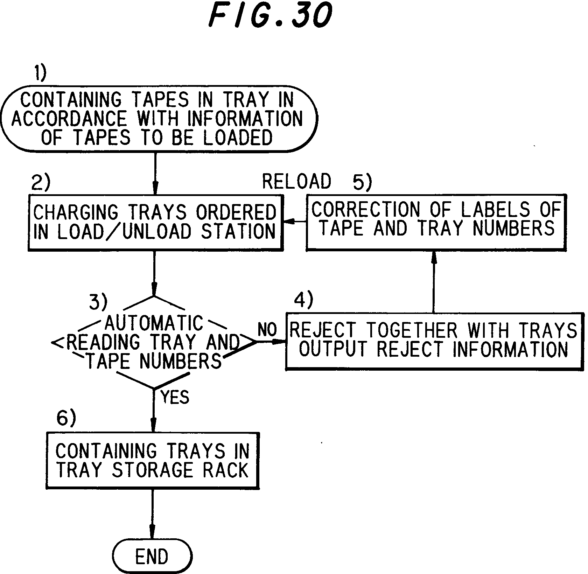

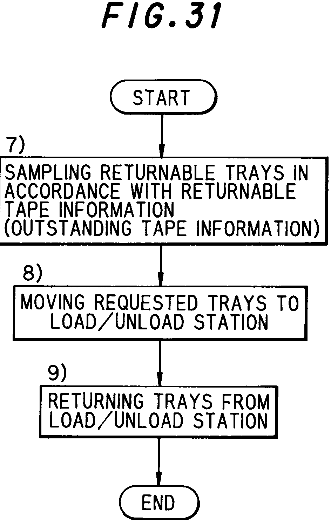

Figure 30 is a flow sheet of loading trays and tapes, in which in accordance with the tape loading information from the host system 60, the tray construction data is programmed to contain the required tape in the tray (Step 1). Through Steps 2 to 6, the tray is contained and freely located in the tray storage rack. Figure 31 is a flow sheet of unloading trays in which according to the returnable tape information from the host system, the returnable tray is picked up (Step 7) and through Steps 8 to 9, trays are returned to the exterior of the installation or to the container 40 (in Figure 2) from the load/unload station.

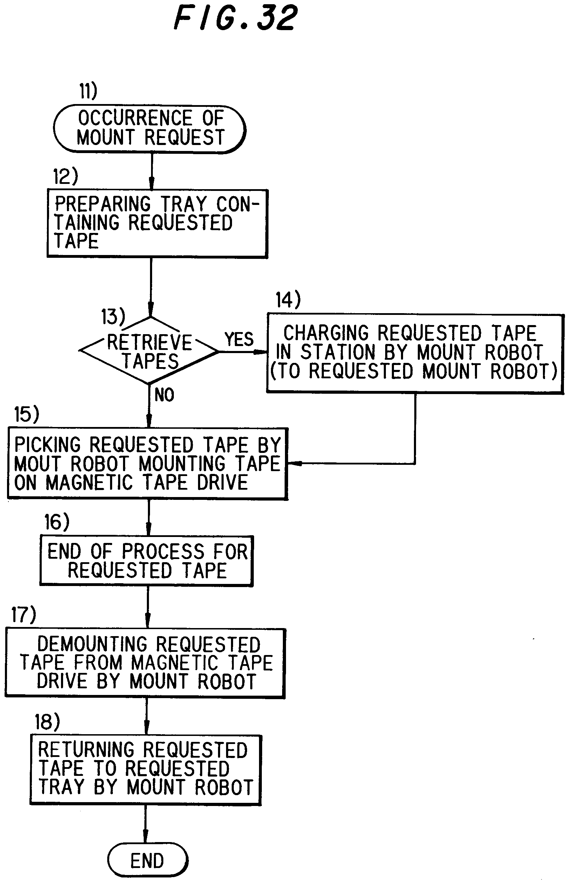

Figure 32 is a flow sheet of an ordinary automatic operation in the installation embodied by the invention. The information control unit 71 is actuated by a mount command of the host system (Step 11) to retrieve the tray containing the required tapes and said retrieval is repeated several times if required by said mount requirement command, if given. In the case of no required tray being retrieved, trays are transferred to the tray station and in the case of the tray station being full with trays, the returnable trays are transferred to the tray storage rack (Step 12). Through Steps 13 to 17, the operated tape is returned to an appropriate tray by the mount robot (Step 18).

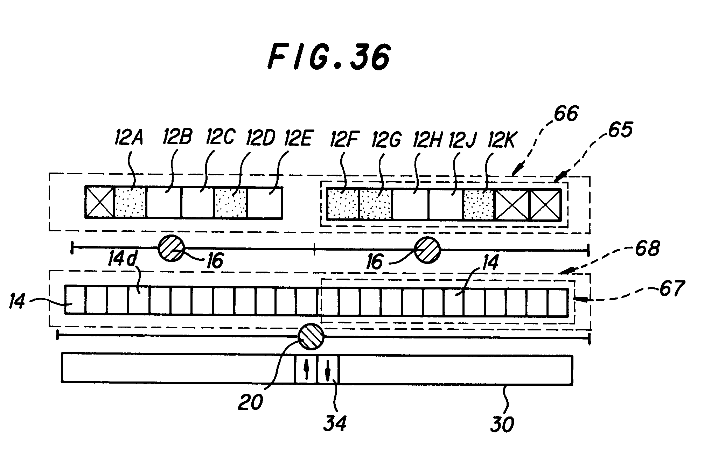

In the operation described above, the manner of selecting the tray station and of assignment of tapes for magnetic tape drives are as shown in Figure 36, indicating the moderated plan view of the whole installation comprising the magnetic tape drive system 65, magnetic tape drive group system 66, the tray station system 67, tray station group 68, while 12B, 12C, 12E, 12H and 12J in magnetic tape drives 12A to 12K indicate empty magnetic tape drives respectively.

For assignment of tapes as required by a command of a host computer for magnetic tape drives, tapes are assigned in empty magnetic tape drives so that drives are arranged nearer to the tray station which is prepared with trays containing required tapes, whereby the mount time of tapes can be shortened and the operation availability of magnetic tape drives is progressed.

For example, in the case that respective assignments of three reels of the tape contained in the same tray are simultaneously required by the mount command of the host computer for five empty magnetic tape drives as shown in Figure 36 (12B, 12C, 12E, 12H and 12J);

(1) Required trays stored in the tray station:

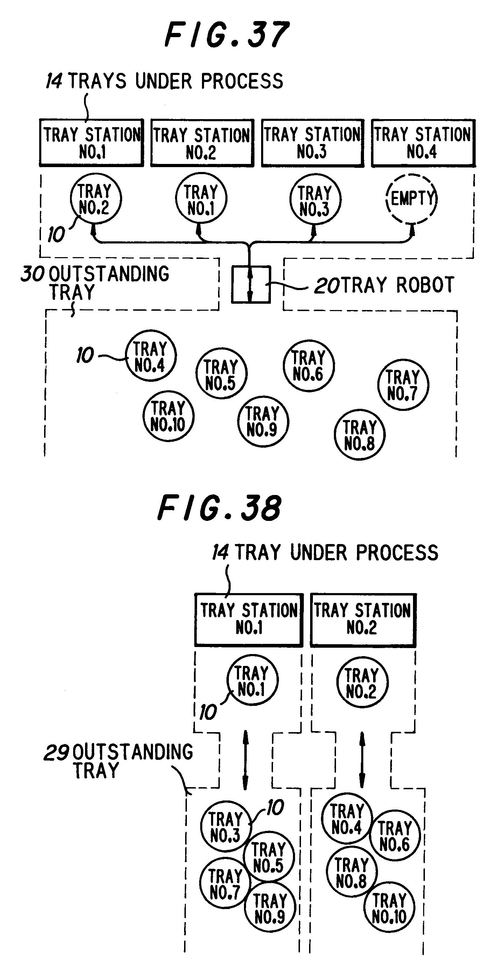

The tray is prepared at the location, 14S, the assignment of tapes is performed for respective empty magnetic tape drives 12H and 12J in magnetic tape drive system 65, which are opposite to the tray station, and for the empty drive 12E of the other system in the magnetic tape drive group 66. For supplying the tray 10 to several tray stations 14, as shown in Figure 38, the outstanding trays which are closely contained in the tray storage rack 29 are picked up and supplied in order one by one, in the tray station 14 and tapes in trays are mounted in magnetic tape drives. In embodiments of the invention, as shown in Figure 37, the tray robot 20 is disposed between each tray station 14 and the tray storage rack 30, outstanding trays 10 are separately contained in the tray storage rack 30, when the operation is finished in any of tray stations, the required tray of outstanding trays is picked up by the tray robot 20 to transfer to the tray station 14 and the required tape in said tray is mounted in magnetic tape drives.

(2) Required trays not stored in the tray station;

There are two ways of selecting tray stations and the assignment of tapes are operated as follows:

(i) Preparing trays in the tray station opposite to the magnetic tape drive system containing a large number of empty drives;

In case of tray being prepared at the location 14d, empty drives, 12B, 12C and 12E opposite to the tray station are operated the assignment of required tapes.

(ii) Preparing trays in spite of number of empty drives;

In case of tray being prepared at the location 14A, the assignment of tapes are operated as same as described in (1) and in case of tray being prepared at the location 14d, the assignment are operated as same as described in (2)(i).

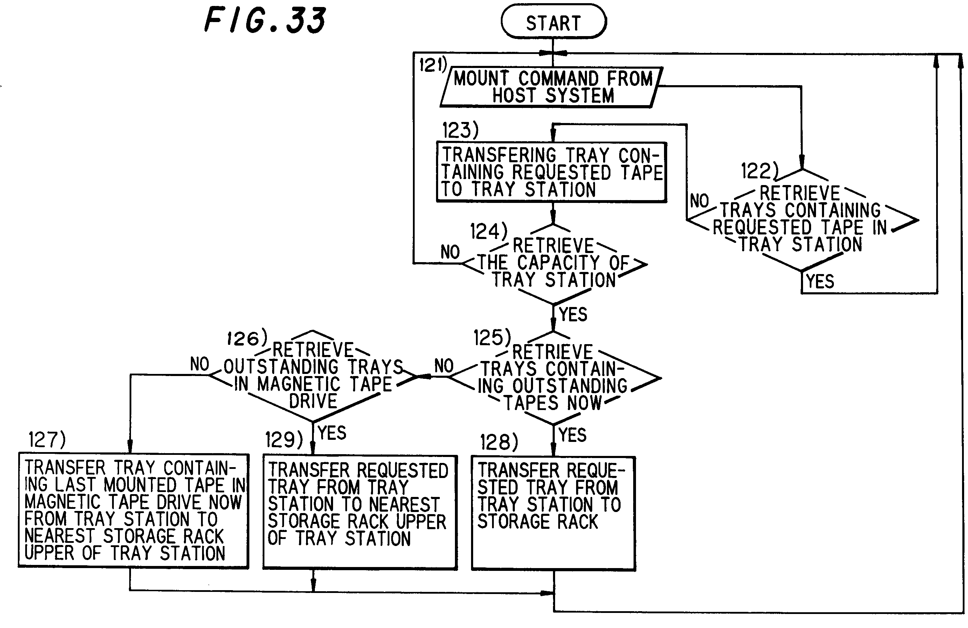

Figure 33 indicates the flow sheet of transferring trays of Step 12 in Figure 32, in which in accordance with a mount command of the host system (Step 121), trays which contain required tapes in the tray station are retrieved (Step 122) and in the case of NO, the tray containing the required tape is transferred from the tray storage rack to the tray station (Step 123), and in the case of YES, the operation is returned to START. From Step 123 through Steps 124 to 129, pre-determined trays are transferred from the tray station to the tray storage rack.

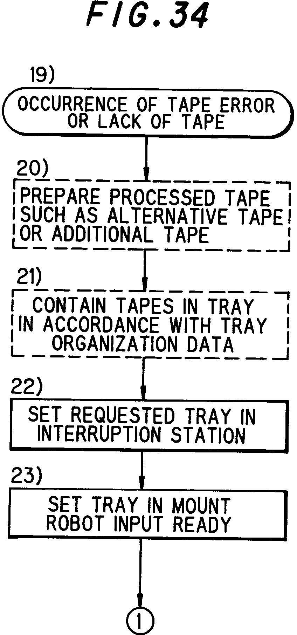

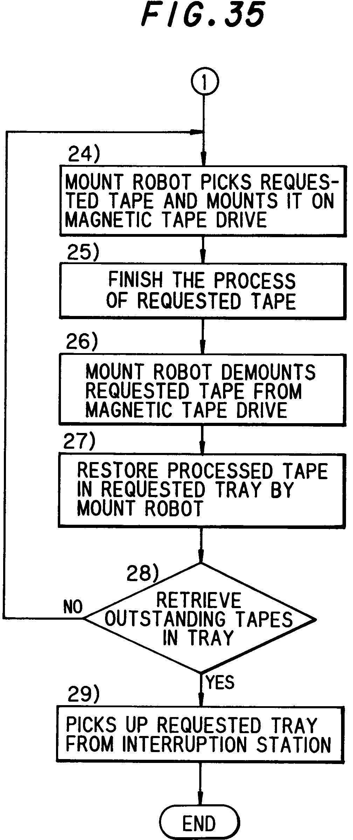

Figure 34 indicates the flow sheet showing the preceding steps of the automatic operation up to the interruption, in which for the occurrence of a tape error or a lack of tapes, prescribed and processed tapes such as alternative tapes or additional tapes are prepared (Step 20). In accordance with the tape information of the host system, the required tape is contained in the tray (Step 21), the required tray is set in the interruption station (Step 22) and the mount robot is input on setting preparation being "OK" (Step 23). As shown by the latter steps of the operation flow in Figure 35, in accordance with the mount command of the host system, the mount robot picks the required tape from the tray and mounts it (Step 24). After the required tape is processed by magnetic tape drives (Step 25), through Steps 26 to 29, the mount robot picks the required tray from the interruption station (Step 29) and the interruption operation is finished.

As described above, according to the embodiments of present invention, only the required tapes are supplied to each of magnetic tape drive group (system), whereby magnetic tape drives are used as available and the stable operation availability of CPU is achieved since the tape mount load can be distributed in each tape drive group. Further the installation illustrating the present invention comprises an automatic mount unit for magnetic tapes substantially having the mount function separate from the storage function of tapes and thus independent of the increasing storage volume of tapes, being the only way of coping with the increasing operated volume of magnetic tapes.

## Claims

1. An automatic mount installation for magnetic tapes and the like comprising:

    a tray for containing a plurality of cartridge magnetic tapes or the like in arranged condition;

    magnetic tape drives for recording and replaying magnetic tape data;

    a tray station for temporarily loading a plurality of trays;

    a mount robot disposed between the tray station and magnetic tape drives for picking the selected magnetic tape from the tray to mount it on magnetic tape drives and for demounting it from the unit to restore it in the tray;

    an information control unit for moving the mounting robot toward the picking position and for controlling picking actuation of the robot; and

    the tray station having a rack capable of horizontally storing a plurality of trays horizontally and the mounting robot having a self-travelling mechanism for travelling along the front of the tray station and for stopping at the picking position.

2. An automatic mount installation for a data exchanging medium comprising:

    a data exchanging medium being a magnetic tape or the like, for example, a magnetic disk, an optical disk and a microfiche;

    a tray for containing a plurality of data exchanging mediums arranged therein;

    a unit for recording and replaying data of a data exchanging medium;

    a tray station for temporarily loading a plurality of trays;

    a mount robot disposed between the tray station and magnetic tape drives recording and replaying the tape data for picking the selected data exchanging medium from the tray to mount it on magnetic tape drives and for demounting it from drives to restore it in the tray;

    a tray storage rack for storing empty trays and outstanding trays which contain data exchanging mediums;

    a load/unload station for loading/unloading and transferring data exchanging mediums in a tray unit to and from the outside of the installation;

    during the tray being transferred, a unit for automatically reading respective recognition codes adhered to the side of the tray and of the tape, thereby the unit confirming and programming newly a map of tape information;

    a tray robot disposed between the tray station and the tray storage rack for transferring the tray from the tray station and to the tray storage rack and vice versa; and

    an information control unit for moving the mount robot toward the picking position of tapes, for controlling picking actuation of the robot and for controlling an actuation of transferring the determined tray from the tray storage rack to the tray robot and vice versa.

3. An automatic mount installation for magnetic tapes and data exchanging mediums as set forth in claims 1 or 2, wherein during the mount robot actuating in accordance with the command of the information control unit, between a tape container and the tray storage rack, the tray robot is adapted to load and unload a plurality of tapes and data exchanging mediums in a tray unit to and from the outside of the installation and also can supply a required tray to the determined tray station at random in accordance with the requirement of mounting tapes.

4. An automatic mount installation for magnetic tapes and data exchanging mediums as set forth in claims 1 and 2, wherein the tray robot includes a travelling carriage moving along the front of the tray storage rack, a post disposed at the center of the travelling carriage, a elevational load base attached to the post and a unit for pulling and pushing trays which are contained in the elevational load base to the tray storage rack and the tray station, respectively.

5. An automatic mount installation for magnetic tapes and data exchanging mediums as set forth in claims 1 and 2, wherein the tray storage rack is connected to the container of the tray and the magnetic tape through the intermediary of a tray delivering counter provided with a shutter.

6. An automatic mount installation for magnetic tapes and data exchanging mediums as set forth in claims 1 and 2, wherein magnetic tape drives are divided into a plurality of groups between which respective tape delivering unit are disposed.

7. An automatic mount installation for magnetic tapes and data exchanging mediums as set forth in claims 1 and 2, wherein the mount robot comprises an articulated robot in which two robots travel on the same rail and has the degenerate operational function capable of continuing the work of mounting tapes by one robot in the case of the other robot being out of order.

8. An automatic mount installation for magnetic tapes and data exchanging mediums as set forth in claims 1 and 2, wherein the mount robot comprises an articulated robot, a carriage to which the robot is secured and a unit provided on the carriage for pulling and pushing the tray to and from the tray station, whereby the robot together with the carriage travels thus holding the tray, mounts the magnetic tape on magnetic tape drives from the tray and demounts the tape from the units to restore it in the tray.

9. An automatic mount installation for magnetic tapes and data exchanging mediums as set forth in claims 7 and 8, wherein the mount robot comprises a turret hand robot in which up to four hand chucks can be attached to the hand portion thereof as a tool.

10. An automatic mount installation for magnetic tapes and data exchanging mediums as set forth in claim 6, wherein a tray delivering unit comprises a base, a recirculating ball gear disposed in the base, a slider moving on the base by a rotation of the ball screw and a magnetic tape container loaded on the slider.

11. An automatic mount installation for magnetic tapes and data exchanging mediums as set forth in claim 10, wherein the tray delivering unit has two parallel bases and sliders which are actuated towards opposite directions on respective bases.

12. An automatic mount installation for magnetic tapes and data exchanging mediums as set forth in claim 6, wherein the tray delivering unit comprises a stand on which the magnetic tape container is rotatably attached.

13. An automatic mount installation for magnetic tapes and data exchanging mediums as set forth in claim 1, wherein magnetic tape drives have an I/O (input/output) station for mounting the magnetic tape from the outside of the installation.

14. An automatic mount installation for magnetic tapes and data exchanging mediums as set forth in claim 13, wherein the I/O station comprises an opening formed at a part of the wall surrounding the installation, a base straddling over the opening, a recirculation ball gear disposed in the base, a slider moving on the base by a rotation of the ball gear and a magnetic tape container loaded on the slider.

15. An automatic mount installation for magnetic tapes and data exchanging mediums as set forth in claim 13, wherein the I/O station comprises an opening formed at a part of the wall surrounding the installation, a stand disposed at the inside of the opening, a slide rail disposed at the upper of the stand and a magnetic tape container attached to the slide rail.

*FIG.1*

FIG.2

FIG.3

EP 0 506 489 A2

FIG. 4

# FIG.5

## FIG.6

# FIG.7

**60** HOST SYSTEM

**61**

HOST COMPUTER
#1
OPERATION
MANAGEMENT
SOFT

**63**

COMMUNI-
CATION
CONTROL
UNIT

**62**

HOST COMPUTER
#2
OPERATION
MANAGEMENT
SOFT

**200**

**180**

**64** CONTROL UNIT
FOR MAGNETIC
TAPE DRIVES

INFORMATION
CONTROL
UNIT **71**

I/F MONITOR **72**

TRANSFER FACILI-
TY CONTROL UNIT
DELIVERING TAPES
LOADING/UNLOAD-
ING TRAYS

**73**

AUTOMATIC READ-
ING UNIT FOR TRAY
AND TAPE NUMBERS

**74**

**75**

CONTROL UNIT
FOR TRAY
ROBOT

**76**

CONTROL UNIT
FOR MOUNT
ROBOT

**70** AUTOMATIC MOUNT
INSTALLATION FOR
MAGNETIC TAPES

# FIG.8

50 MOUNT/DEMOUNT INDICATOR

51a — MOUNT | DEMOUNT — 51b

ADDRESS IN TRAY | ADDRESS IN TRAY

52a — | — 52b

# FIG.9

53 INDICATOR FOR
LOADING/UNLOADING TRAYS

54a — LOADING | UNLOADING — 54b

LINE COLUMN STAGE | LINE COLUMN STAGE

55a — | — 55b

(TO) | (FROM)

# FIG.10

56 INDICATOR FOR
EXCHANGING TRAYS

57a — SUPPLY | RECOVERY — 57b

LINE COLUMN STAGE    ST# | ST#    LINE COLUMN STAGE

58a — → | → — 58b

## FIG.11

## FIG.12

## FIG.13

## FIG.14

## FIG.15

# FIG.16

# FIG.17

## FIG.18

# FIG.19

# FIG.20

# FIG.21

## FIG.22

145 13 13 79

## FIG.23

145 79 13 144 146

**FIG.24**

**FIG.25**

# FIG.26

## FIG.27

## FIG.28

# FIG.29

# FIG.30

1)

CONTAINING TAPES IN TRAY IN
ACCORDANCE WITH INFORMATION
OF TAPES TO BE LOADED

2)                          RELOAD   5)

CHARGING TRAYS ORDERED      CORRECTION OF LABELS OF
IN LOAD/UNLOAD STATION      TAPE AND TRAY NUMBERS

3)                          4)

AUTOMATIC                   NO   REJECT TOGETHER WITH TRAYS
READING TRAY AND                 OUTPUT REJECT INFORMATION
TAPE NUMBERS

YES

6)

CONTAINING TRAYS IN
TRAY STORAGE RACK

END

# F I G. 31

START

7)
SAMPLING RETURNABLE TRAYS IN
ACCORDANCE WITH RETURNABLE
TAPE INFORMATION
(OUTSTANDING TAPE INFORMATION)

8)
MOVING REQUESTED TRAYS TO
LOAD/UNLOAD STATION

9)
RETURNING TRAYS FROM
LOAD/UNLOAD STATION

END

# FIG.32

11)
OCCURRENCE OF
MOUNT REQUEST

12)
PREPARING TRAY CON-
TAINING REQUESTED
TAPE

13)
RETRIEVE
TAPES — YES → 14) CHARGING REQUESTED TAPE
IN STATION BY MOUNT ROBOT
(TO REQUESTED MOUNT ROBOT)

NO

15)
PICKING REQUESTED TAPE BY
MOUT ROBOT MOUNTING TAPE
ON MAGNETIC TAPE DRIVE

16)
END OF PROCESS FOR
REQUESTED TAPE

17)
DEMOUNTING REQUESTED
TAPE FROM MAGNETIC TAPE
DRIVE BY MOUNT ROBOT

18)
RETURNING REQUESTED
TAPE TO REQUESTED
TRAY BY MOUNT ROBOT

END

## FIG.33

START

121) MOUNT COMMAND FROM HOST SYSTEM

123) TRANSFERING TRAY CONTAINING REQUESTED TAPE TO TRAY STATION

124) RETRIEVE THE CAPACITY OF TRAY STATION — NO / YES

122) RETRIEVE TRAYS CONTAINING REQUESTED TAPE IN TRAY STATION — NO / YES

126) RETRIEVE OUTSTANDING TRAYS IN MAGNETIC TAPE DRIVE — NO / YES

125) RETRIEVE TRAYS CONTAINING OUTSTANDING TAPES NOW — NO / YES

127) TRANSFER TRAY CONTAINING LAST MOUNTED TAPE IN MAGNETIC TAPE DRIVE NOW FROM TRAY STATION TO NEAREST STORAGE RACK UPPER OF TRAY STATION

129) TRANSFER REQUESTED TRAY FROM TRAY STATION TO NEAREST STORAGE RACK UPPER OF TRAY STATION

128) TRANSFER REQUESTED TRAY FROM TRAY STATION TO STORAGE RACK

EP 0 506 489 A2

# F I G. 34

19)

> OCCURRENCE OF TAPE ERROR
> OR LACK OF TAPE

20)
```
PREPARE PROCESSED TAPE
SUCH AS ALTERNATIVE TAPE
OR ADDITIONAL TAPE
```

21)
```
CONTAIN TAPES IN TRAY
IN ACCORDANCE WITH TRAY
ORGANIZATION DATA
```

22)

SET REQUESTED TRAY IN
INTERRUPTION STATION

23)

SET TRAY IN MOUNT
ROBOT INPUT READY

①

# F I G. 35

①

**24)**
MOUNT ROBOT PICKS REQUES-
TED TAPE AND MOUNTS IT ON
MAGNETIC TAPE DRIVE

**25)**
FINISH THE PROCESS
OF REQUESTED TAPE

**26)**
MOUNT ROBOT DEMOUNTS
REQUESTED TAPE FROM
MAGNETIC TAPE DRIVE

**27)**
RESTORE PROCESSED TAPE
IN REQUESTED TRAY BY
MOUNT ROBOT

**28)**
RETRIEVE
OUTSTANDING TAPES
IN TRAY

NO

YES

**29)**
PICKS UP REQUESTED TRAY
FROM INTERRUPTION STATION

END

# FIG.36

EP 0 506 489 A2

# F I G. 37

**14** TRAYS UNDER PROCESS

| TRAY STATION NO.1 | TRAY STATION NO.2 | TRAY STATION NO.3 | TRAY STATION NO.4 |

TRAY NO.2   TRAY NO.1   TRAY NO.3   (EMPTY)

**10**

**30** OUTSTANDING TRAY

**20** TRAY ROBOT

**10** — TRAY NO.4   TRAY NO.5   TRAY NO.6   TRAY NO.7

TRAY NO.10   TRAY NO.9   TRAY NO.8

# F I G. 38

**14** TRAY UNDER PROCESS

| TRAY STATION NO.1 | TRAY STATION NO.2 |

TRAY NO.1   TRAY NO.2

**10**

**29** OUTSTANDING TRAY

TRAY NO.3 — **10**   TRAY NO.4   TRAY NO.6

TRAY NO.5   TRAY NO.8

TRAY NO.7   TRAY NO.9   TRAY NO.10